Europäisches Patentamt

European Patent Office

Office européen des brevets

(11) Veröffentlichungsnummer: **0 304 543 B1**

(12) **EUROPÄISCHE PATENTSCHRIFT**

(45) Veröffentlichungstag der Patentschrift: **19.02.92**

(21) Anmeldenummer: **88106420.8**

(22) Anmeldetag: **21.04.88**

(51) Int. Cl.⁵: **B65G 17/20**

(54) **Hängeförderer.**

(30) Priorität: **28.08.87 DE 3728843**

(43) Veröffentlichungstag der Anmeldung:
**01.03.89 Patentblatt 89/09**

(45) Bekanntmachung des Hinweises auf die
Patenterteilung:
**19.02.92 Patentblatt 92/08**

(84) Benannte Vertragsstaaten:
**AT CH DE FR GB IT LI**

(56) Entgegenhaltungen:
**CH-A- 542 739**
**DE-C- 94 915**
**DE-C- 498 814**

(73) Patentinhaber: **VEIT TRANSPO GMBH**
**Rudolf-Diesel-Strasse 3**
**W-8910 Landsberg/Lech(DE)**

(72) Erfinder: **Pönisch, Martin, Dipl.-Ing.**
**Bahnhofstrasse 28**
**W-8011 Zorneding(DE)**
Erfinder: **Hafner, Josef, Dr.-Ing.**
**Wettersteinstrasse 12**
**W-8910 Landsberg/Lech(DE)**
Erfinder: **Schönenberger, Rolf, Dipl.-Ing.**
**Dipl.-Wirtsch.-Ing**
**Wettersteinstrasse 28**
**W-8910 Landsberg/Lech(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung bezieht sich auf einen Hängeförderer der im Oberbegriff von Anspruch 1 erläuterten Art.

Ein derartiger Hängeförderer ist aus der DE-C-94915 bekannt. Das Betriebsmittel des bekannten Hängeförderers rollt mit Hilfe von Laufrollen auf der Laufbahn einer Schiene ab. Bei diesem Hängeförderer wird als Antriebsglied ein endloses Seil verwendet, das in eine Umfangsnut der genuteten Laufrollen eingreift. Das Seil wird angetrieben und nimmt durch Reibung in der Nut die Laufrolle in seiner Bewegung mit. An sich sind direkt an den Laufrollen angreifende Antriebe in konstruktiver Hinsicht vorteilhaft, da dabei wesentlich weniger Kollisionsgefahr zwischen dem Antrieb und den zu transportierenden Gegenständen besteht, als dies bei einem seitlichen Antrieb oder einem Antrieb durch unterhalb der Laufflächen mit den Betriebsmitteln verbundenen Förderketten der Fall ist. Bei einem Reibantrieb an den Laufrollen besteht jedoch immer das Problem, daß die zum Mitnehmen der Laufrollen erwünschte Reibung gleichzeitig die Bewegung der Laufrollen abbremst. So ist der bekannte Seilantrieb kaum in der Lage, die Laufrollen mit gleichbleibender Geschwindigkeit auch über Steigungen und Gefälle zu transportieren. Darüber hinaus müssen die Nuten der Laufrollen sorgfältig gefertigt werden, um ein Verklemmen des Seils oder einen verstärkten Abrieb zu vermeiden. Außerdem ergeben sich Schwierigkeiten, die zum Antreiben erforderliche Normalkraft zeitlich und örtlich gleichmäßig auf alle Laufrollen aufzubringen.

Aus der CH-A-542 739 ist eine Seilschwebebahn bekannt, die auf einem Tragseil abrollt. Der Antrieb der Seilschwebebahn enthält drei Seilscheiben, die im Dreieck angeordnet sind und von denen mindestens eine drehbar angetrieben ist. Durch die Anordnung der Seilscheiben läuft das Tragseil, das dadurch die angetriebene Seilscheibe über wenigstens 180° umschlingt. Die Kontaktfläche der angetriebenen Seilscheibe mit dem Tragseil ist mit einer Einlage aus elastischem Material versehen. Das elastische Material soll die Lebensdauer der Seilscheibe erhöhen, und es soll druckfest sein. Im Betrieb fährt die Seilschwebebahn durch die angetriebene Seilscheibe am stationären Tragseil entlang, wobei sich das Tragseil lediglich in vertikaler Richtung zwecks Umschlingung der Seilscheiben bewegt.

Der Erfindung liegt somit die Aufgabe zugrunde, einen Antrieb für einen auf Schienen laufenden Hängeförderer aufzuzeigen, der einfach und kostengünstig in der Herstellung und zuverlässig in der Förderwirkung ist.

Die Aufgabe wird durch die Merkmale des Anspruchs 1 gelöst.

Durch die erfindungsgemäße Ausgestaltung des Antriebs mit dem auf einem endlosen flexiblen Träger angeordneten, elastisch verformbaren Mitnehmermaterial wird auf konstruktiv einfache Weise eine zuverlässige Förderwirkung sowohl über horizontale Strecken als auch über Steigungen und fälle von bis zu 30° erreicht. Durch die elastische Verformung des Mitnehmermaterials wird eine Normalkraft ausgeübt, die im Zusammenspiel mit dem Reibungskoeffizienten des Mitnehmermaterials einen Drehimpuls in die Laufrolle einleitet, so daß diese auf der Laufbahn abrollt. Durch die elastische Verformbarkeit des Mitnehmermaterials tritt ein Verkanten der Laufrollen nicht auf, auch wenn das Mitnehmermaterial direkt an der Laufrolle angreift. Verschlissenes Mitnehmermaterial kann ausgewechselt werden, ohne daß der gesamte Antrieb ausgebaut werden muß. Weiterhin können Betriebsmittel auf einfache Weise von der Laufbahn abgenommen werden, ohne daß der Antrieb der anderen Betriebsmittel unterbrochen oder gar, wie bei der bekannten Seil-Hängebahn, die Spannung im Förderseil gelöst werden muß. Auch das Anstauen von Betriebsmitteln oder andere Abstandsveränderungen zwischen zwei frei hintereinander laufenden Betriebsmitteln ist ohne weiteres möglich. Der Antrieb kann problemlos von oben her erfolgen, so daß Kollisionen mit dem Betriebsmittel und mit den am Betriebsmittel hängenden Gegenständen sowohl bei geraden Strecken als auch, was wesentlich wichtiger ist, bei Abzweigungen oder Weichen vermieden werden können.

Die Anordnung des Mitnehmermaterials an einem flexiblen Träger gemäß Anspruch 2 stellt eine einfache und kostengünstige konstruktive Ausgestaltung dar, mit der auf einfache Weise das Aufbringen einer Antriebskraft auf das Betriebsmittel erreicht werden kann.

Greift das Mitnehmermaterial gemäß Anspruch 2 an der Laufrolle des Betriebsmittels an, so können auch handelsübliche Betriebsmittel ohne Umrüstung verwendet werden.

Besonders zweckmäßig ist es, als Träger eine Rollenkette nach Anspruch 3 zu verwenden, die sowohl einfach und verschleißarm angetrieben werden kann als auch eine gute Unterstützung des Mitnehmermaterials ergibt.

Alternativ dazu kann jedoch als Träger eine Gliederkette nach Anspruch 4 verwendet werden, die den Vorteil einer einfachen und kostengünstigen Herstellung hat.

Durch die Anordnung des Trägers in einer Führung nach Anspruch 5 kann dieser und somit das an ihm angeordnete Mitnehmermaterial auf konstruktiv einfache Weise in einem vorbestimmten Abstand zur Laufbahn der Laufrolle gehalten werden.

Durch die Anordnung eines flachen Bandes als Widerlager zwischen dem Mitnehmermaterial und dem Träger gemäß Anspruch 6 wird eine gleichmäßige und vollflächige Unterstützung des Mitnehmermaterials erreicht.

Durch die Ausgestaltung nach Anspruch 7 ist es möglich, die freie Oberfläche des Mitnehmermaterials immer parallel zur Laufbahn einzustellen, auch wenn der Träger konstruktionsbedingt in einer anderen Stellung angeordnet werden muß.

Bei besonders einfach aufgebauten Hängeförderern kann es unter Umständen ausreichen, wenn sich das Mitnehmermaterial gemäß Anspruch 8 direkt gegen den als Widerlager ausgebildeten Träger abstützt.

Durch die Ausgestaltung nach Anspruch 9 wird das Auswechseln verschlissener Mitnehmermaterialien noch weiter erleichtert.

Durch das alternativ mögliche Aufschäumen nach Anspruch 10 wird eine dauerhafte und einfach herzustellende Verbindung geschaffen.

Das Mitnehmermaterial kann gemäß Anspruch 11 die gesamte Oberfläche des Trägers bedecken.

Gemäß Anspruch 12 ist es jedoch auch möglich, das Mitnehmermaterial nur segmentweise aufzubringen, ohne daß die Antriebsfunktion leidet.

Anspruch 13 beschreibt eine üblicherweise eingesetzte Querschnittsform für das Mitnehmermaterial.

Für Sonderzwecke, beispielsweise als Ersatz oder als Ergänzung der in Anspruch 7 beschriebenen Winkellasche, kann ein Mitnehmermaterial mit einem dreieckigen Querschnitt gemäß Anspruch 14 verwendet werden.

Anspruch 15 beschreibt ein Mitnehmermaterial, das sich in der praktischen Erprobung als besonders zweckmäßig erwiesen hat.

Alternativ zu verwendende Mitnehmermaterialien sind in Anspruch 16 angegeben.

Zur Unterstützung der Förderwirkung, insbesondere in Steigungen oder Gefällstrecken kann auch die Laufbahn gemäß Anspruch 17 mit einem Reibbelag versehen sein.

Besonders zweckmäßig ist es, wenn dieser Reibbelag gemäß Anspruch 18 aus dem Mitnehmermaterial besteht.

Die Förderwirkung auf Steigungen oder Gefällstrecken wird gemäß Anspruch 19 entscheidend verbessert, wenn diese Strecken in einer Seitenabhängung des Betriebsmittels durchfahren werden.

Eine weitere Verbesserung der Förderwirkung auf Steigungen oder Gefällstrecken wird nach Anspruch 20 dadurch erreicht, daß die Kompression des Mitnehmermaterials erhöht wird.

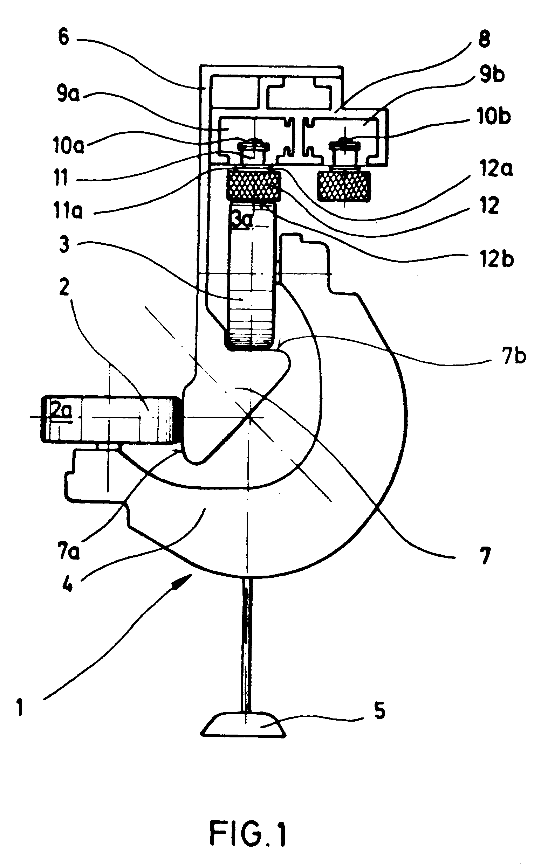

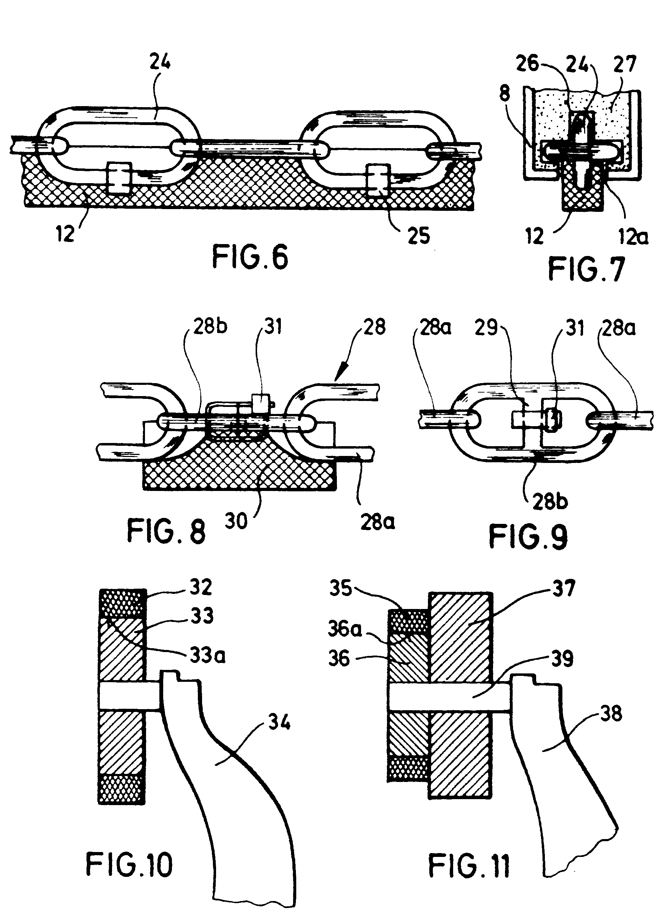

Ausführungsbeispiele der Erfindung werden nachfolgend anhand der Zeichnungen näher erläutert. Es zeigen:
Fig. 1
eine schematische Vorderansicht eines ersten Ausführungsbeispieles eines erfindungsgemäßen Hängeförderers,
Fig. 2
die Seitenansicht auf Fig. 1,
Fig. 3
eine schematische Vorderansicht eines weiteren Ausführungsbeispieles eines erfindungsgemäßen Hängeförderers,
Fig. 4
eine schematische Vorderansicht eines weiteren Ausführungsbeispieles eines erfindungsgemäßen Hängeförderers in einer Gefällstrecke,
Fig. 5A bis 5D
Befestigunggmöglichkeiten des Mitnehmermaterials,
Fig. 6
eine alternative Ausführungsform eines Trägers,
Fig. 7
eine Vorderansicht des Trägers aus Fig. 6 in einer Führung,
Fig. 8
ein alternatives Ausführungsbeispiel eines Trägers,
Fig. 9
ein Detail aus Fig. 8 in Draufsicht,
Fig. 10
eine schematische Darstellung einer Laufrolle für ein Betriebsmittel, und
Fig. 11
eine weitere schematische Darstellung einer Laufrolle für ein Betriebsmittel.

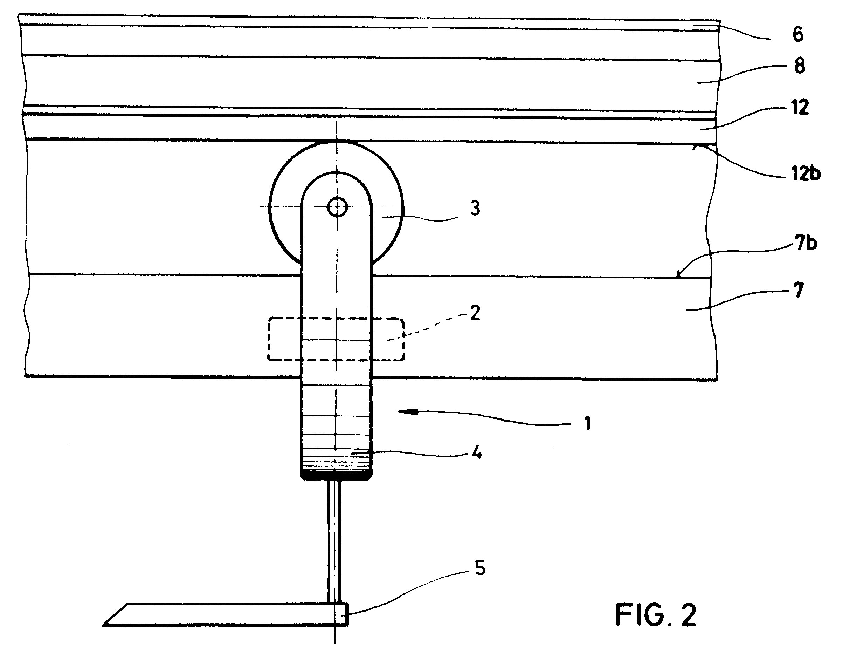

Aus den Fig. 1 und 2 ist ein Betriebsmittel 1 ersichtlich, das zwei Laufrollen 2 und 3 aufweist, die mit einem Bügel 4 derart verbunden sind, daß die Drehachsen der beiden Laufrollen 2 und 3 senkrecht zueinander angeordnet sind. Am Bügel 4 ist in einer nicht dargestellten Führung entweder ein Befestigungsmittel für einen zu transportierenden Gegenstand oder, wie dargestellt, eine Quertraverse 5 angeordnet, mit der das Betriebsmittel 1 mit einem weiteren Betriebsmittel zu einem Langtrolley verbunden ist. Die Laufrollen 2 und 3 sind scheibenartig mit flachen Laufflächen 2a bzw. 3a ausgebildet.

An einem nicht dargestellten, beispielsweise von der Decke der Arbeitsraums herabhängenden Gestell, ist ein langgestrecktes Laufprofil 6 befestigt. Das Laufprofil 6 weist an seinem unteren Ende eine Laufschiene 7 mit zwei senkrecht zueinander angeordneten Laufbahnen 7a und 7b auf. Die Laufbahn 7a ist senkrecht und die Laufbahn 7b waagerecht angeordnet. Auf der Laufbahn 7a ist die Laufrolle 2 abgestützt, während auf der Laufbahn 7b die Laufrolle 3 läuft, so daß sich das Betriebsmittel 1 in einer seitenabgehängten Position befindet. Oberhalb der waagerecht liegenden Laufbahn 7b ist ein Querträger 8 am Laufprofil 6 befestigt. Am Querträger 8 sind zwei Gleitleisten 9a bzw. 9b befestigt, in denen, in Form einer Ausnehmung, jeweils eine Gleitführung 10a, 10b angeordnet ist, wobei die Gleitführungen 10a, 10b waagerecht nebeneinander liegen und jeweils ein Trum eines als Rollenkette 11 ausgebildeten Trägers eines Antriebsgliedes aufnehmen. Die Gleitführungen 10a, 10b sind formschlüssig an die Form der Rollenkette 11 angepaßt, so daß die Rollenkette 11 gegen Herausfallen gesichert ist, obwohl die Gleitführungen 10a, 10b an der nach unten weisenden Seite offen sind. Außerhalb der Gleitführungen 10a, 10b enthält das Antriebsglied ein elastisch verformbares Mitnehmermaterial 12, das sich mit seiner Rückseite 12a entweder direkt an der Rollenkette 11 oder an einem mit der Rollenkette 11 verbundenen Band 11a als Widerlager abstützt.

Als Mitnehmermaterial 12 eignet sich jeder Werkstoff, der eine hohe Stoßelastizität, eine große Volumenkompressibilität, eine hohe Rückstellkraft, einen geringen Druckverformungsrest, eine gute Abriebsbeständigkeit aufweist und schwingungsdämpfend sowie alterungs- und witterungsbeständig, insbesondere beständig gegen Öl, Fett, Benzin, Ozon und Stickstoff ist. Besonders geeignet ist dafür zelliges Polyurethan (PUR zellig), dessen Arbeitsaufnahmevermögen durch Variation der Rohdichte eingestellt werden kann. Als Mitnehmermaterial ist jedoch auch Moosgummi, Zellkautschuk, Kautschuk oder andere Schaumstoffe geeignet.

Das Mitnehmermaterial liegt in Streifenform mit rechteckigem Querschnitt vor und ist über die gesamte Länge der Rollenkette 11 mit dieser verbunden. Es ist jedoch auch möglich, das Mitnehmermaterial in Segmenten von ca. 0,5 m Länge mit dazwischenliegenden Abständen zum Spannungsausgleich auf der Rollenkette 11 zu befestigen. Die Befestigung kann durch Kleben, Nieten oder Klemmen erfolgen. Weiterhin ist es möglich, das Mitnehmermaterial auch direkt auf den Träger aufzuschäumen.

Die nach unten weisende, freie Oberfläche 12b des Mitnehmermaterials 12 verläuft im wesentlichen parallel zur waagerechten Laufbahn 7b. Dabei sind die Gleitführungen 10a bzw. 10b derart angeordnet, daß sich ein Trum des Mitnehmermaterials 12 genau senkrecht über der Laufbahn 7b befindet. Der Abstand zwischen der Laufbahn 7b und der freien Oberfläche 12b des Mitnehmermaterials 12 ist so eingestellt, daß das Mitnehmermaterial 12 zwischen der Lauffläche 3a der Laufrolle 3 und der als Widerlager fungierenden Rollenkette 11 komprimiert wird. Der Grad der Kompression kann durch die Veränderung des Abstandes zwischen der freien Oberfläche 12b und der Laufbahn 7b variiert werden, so daß sich, innerhalb gewisser Grenzen, jede gewünschte Normalkraft auf die Laufrolle 3 einstellen läßt.

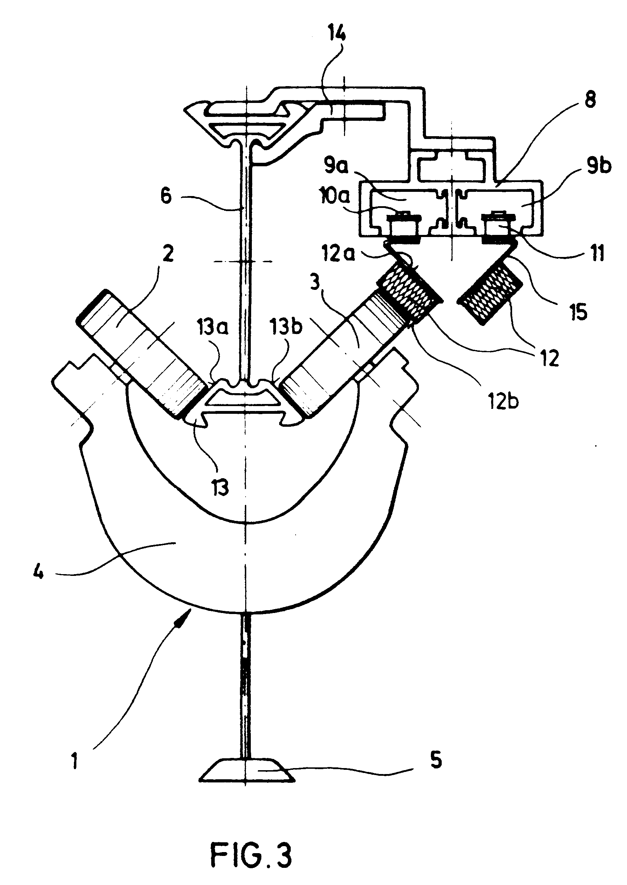

Fig. 3 zeigt ein weiteres Ausführungsbeispiel eine Hängeförderers, wobei gleiche Bezugszeichen gleiche oder vergleichbare Bauteile bezeichnen. In diesem Ausführungsbeispiel wird das Betriebsmittel 1 in einer mittenabgehängten Position gefördert. Zu diesem Zweck ist am Laufprofil 6 eine Laufschiene 13 befestigt, die zwei im Winkel von 45° zur Senkrechten verlaufende Laufbahnen 13a und 13b aufweist, wobei die Laufrolle 2 auf der Laufbahn 13a und die Laufrolle 3 auf der Laufbahn 13b abrollen und durch die am Betriebsmittel 1 bzw. der Quertraverse 5 hängende Last gleichmäßig belastet werden. Der Querträger 8 ist an einem Ausleger 14 befestigt, der seitlich vom Laufprofil 6 absteht. Der Querträger 8 ist in bereits beschriebener Weise mit den Gleitleisten 9a, 9b und den darin angeordneten, waagerecht nebeneinanderliegenden Gleitführungen 10a, 10b für den als Rollenkette 11 ausgebildeten Träger des Antriebsgliedes versehen. Das Antriebsglied enthält weiterhin Winkellaschen 51, die mit ihrem einen Schenkel mit der Rollenkette 11 verbunden, z. B. vernietet, sind. Der freie Schenkel der Winkellaschen 15 erstreckt sich unter einem Winkel von 45° über die Rollenkette 11 und ist als Widerlager für das streifenförmige Mitnehmermaterial 12 ausgebildet, das mit seiner Rückseite 12a beispielsweise durch Nieten oder Kleben mit ihm verbunden ist. Die linke Gleitführung 10a ist derart angeordnet, daß die freie Oberfläche 12b des Mitnehmermaterials der rechten Laufbahn 13b der Laufschiene 13 derart gegenüberliegt, daß die Laufrolle 3 angetrieben werden kann.

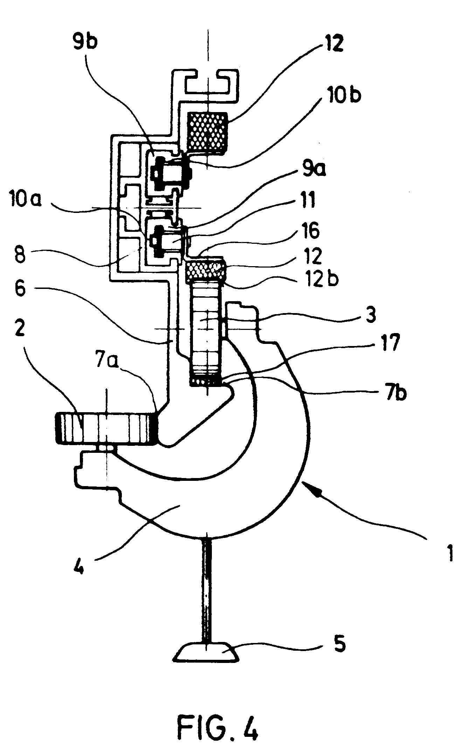

Fig. 4 zeigt ein weiteres Ausführungsbeispiel eines Hängeförderers, wobei gleiche oder vergleichbare Bauteile mit den gleichen Bezugszeichen gekennzeichnet sind. Das Betriebsmittel 1 befindet sich, wie in der Darstellung nach den Fig. 1 und 2, in einer seitenabgehängten Position, in der die Laufrolle 2 sich gegen die senkrechte Laufbahn 7a abstützt und die Laufrolle 3 auf der waagerechten Laufbahn 7b der Laufschiene 7 abrollt. der Querträger 8 ist am Laufprofil 6 in einer senkrechten Stellung befestigt, in der die beiden Trums der Rollenkette 11 senkrecht übereinanderlaufen. Der Querträger 8 ist in bereits beschriebener Weise mit den Gleitleisten 9a und 9b und den darin angeordneten Gleitführungen 10a bzw. 10b versehen. An der Rollenkette 11 sind Winkellaschen 16 mit ihrem einen Schenkel angenietet. Der andere, freie Schenkel der Winkellaschen 16 steht unter einem Winkel von 90° über die Rollenkette 11 vor und ist in bereits beschriebener Weise als Widerlager für das Mitnehmermaterial 12 ausgebildet. Das Mitnehmermaterial 12 liegt wiederum in Streifenform mit rechteckigem Querschnitt vor und ist mit seiner Rückseite 12a an den freien Schenkeln der Winkellaschen 16 angeklebt oder angenietet. Die untere Gleitführung 10a ist derart angeordnet, daß sich die freie Oberfläche 12b des unteren Trums des Mitnehmermaterials 12 genau senkrecht über der Laufbahn 7b befindet. Wie der Fig. 4 deutlich zu entnehmen, ist hierbei der Abstand zwischen der freien Oberfläche 12b des Mitnehmermaterials 12 und der Laufbahn 7b gegenüber den Darstellungen in den Fig. 1 bis 3 noch etwas weiter verringert, so daß das Mitnehmermaterial 12 stärker komprimiert wird. Auf diese Weise ist es möglich, das Betriebsmittel 1 über schiefe Ebenen unter einem Winkel von bis zu 30° zu fördern. Um die Förderleistung noch weiter zu verbessern, ist auf der Laufbahn 7b ein Reibbelag 17 in Form eines dünnen Streifens aufgetragen. Der Reibbelag 17 kann entweder die gesamte Laufbahn 7b bedecken oder nur an besonders kritischen Stellen aufgebracht sein. Als Reibbelag eignet sich bevorzugt derjenige Werkstoff, der auch für das Mitnehmermaterial verwendet wird.

Die Förderung über schiefe Ebenen mit Hilfe eines elastisch verformbaren Mitnehmermaterials ist besonders gut dann durchführbar, wenn das Betriebsmittel 1 sich in den in den Fig. 1, 2 und 4 gezeichneten seitenabgehängten Positionen befindet. Es ist deshalb zweckmäßig, vor schiefen Ebenen auch die sich in einer mittenabgehängten Position nach Fig. 3 befindenden Betriebsmittel in die seitenabgehängte Position zu überführen. Wechseleinrichtungen, mit denen die Betriebsmittel auf einfache und unproblematische Weise umgehängt werden können, sind der P 36 37 287 zu entnehmen.

In den Fig. 5A bis 5D sind verschiedene Ausgestaltungen der Verbindung zwischen dem Mitnehmermaterial 12 mit der als Träger ausgebildeten Rollenkette 11 ersichtlich. Bei dem Ausführungsbeispiel nach Fig. 5A wird ein Streifen eines Mitnehmermaterials 12 verwendet, das einen Querschnitt in Form eines rechtwinkligen Dreiecks aufweist. Dieses Ausführungsbeispiel kann beispielsweise anstelle der Winkellasche 15 von Fig. 3 verwendet werden. Das Mitnehmermaterial 12 ist mit einem Kabelbinder 18 lösbar mit der Rollenkette 11 verbunden, wobei der Kabelbinder zwischen zwei Rollen der Rollenkette 11 und durch ein Loch im Mitnehmermaterial 12 hindurchgeführt wird. Diese Verbindung ist leicht lösbar, falls das Mitnehmermaterial verschlissen ist und ausgetauscht werden soll.

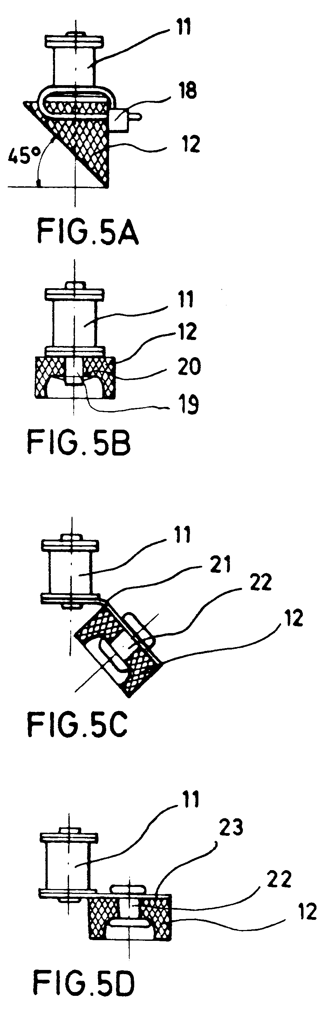

Eine weitere lösbare Verbindung zeigt Fig. 5B. In diesem Ausführungsbeispiel ist die Rollenkette 11 mit verlängerten Bolzen 19 versehen, die nach unten über die Rollenkette 11 vorstehen. Das Mitnehmermaterial 12 ist mit einem Durchtrittsloch versehen, durch das der verlängerte Bolzen 19 geschoben werden kann. Die Befestigung des Mitnehmermaterials 12 erfolgt durch eine Federmutter (einen Krallblechring) 20, die am Bolzen 19 festgelegt wird.

Dabei kann das Mitnehmermaterial 12 im Bereich um den Bolzen 19 mit einer die Federmutter 20 aufnehmenden Vertiefung versehen sein, oder im Bereich unter der Federmutter 20 derart komprimiert werden, daß der Bolzen 19 nicht in Kontakt mit der Lauffläche der Laufrolle gelangt.

Die Fig. 5C und 5D zeigen unterschiedlich ausgebildete Laschen. In Fig. 5C wird eine Winkellasche 21 verwendet, deren Schenkel zwischen sich einen stumpfen Winkel einschließen. Die Befestigung des Mitnehmermaterials 12 erfolgt hier durch Niete 22, die das Mitnehmermaterial 12 durchsetzen und wiederum in eine Vertiefung eingreifen oder das Mitnehmermaterial derart komprimieren, daß die Niete 22 die Laufrollen nicht berühren.

In Fig. 5D werden ebenfalls Niete 22 zur Befestigung des Mitnehmermaterials 12 verwendet, wobei jedoch das Mitnehmermaterial 12 hier an einer geraden, waagerecht verlaufenden Lasche 23 befestigt wird. Soll das Mitnehmermaterial nach den Fig. 5C bzw. 5D ausgewechselt werden, so können die Niete auf einfache Weise abgekniffen werden. Selbstverständlich ist es jedoch auch möglich, das Mitnehmermaterial auch an den Laschen beispielsweise durch einen Kabelbinder oder durch eine Federmutter leicht lösbar zu befestigen, wogegen das dreieckig ausgebildete Mitnehmermaterial nach Fig. 5A ebenfalls genietet werden kann.

Die Figuren 6 und 7 zeigen ein weiteres Ausführungsbeispiel eines Trägers, der als Gliederkette 24 ausgebildet ist. Die Gliederkette 24 kann in üblicher Weise aus Stahl oder aus einem Kunststoff sein. Das als endloses Band zusammengefügte Mitnehmermaterial 12 ist von der Rückseite her geschlitzt, so daß die senkrecht stehenden Glieder der Gliederkette 24 in das Mitnehmermaterial eintauchen können. Das Mitnehmermaterial 12 stützt sich mit seiner Rückseite somit im wesentlichen an den waagerecht liegenden Gliedern und den Schmalseiten der senkrecht stehenden Glieder der Gliederkette 24 ab. Mit Hilfe von Kabelbindern 25 wird das Mitnehmermaterial 12 an den senkrecht stehenden Gliedern der Gliederkette 24 befestigt.

Wie Fig. 7 zeigt, ist die Gliederkette 24 wiederum in einer als Gleitführung 26 wirkenden Ausnehmung in einer Gleitleiste 27 des Querträgers 8 gleitend geführt. Die Gleitführung 26 ist formschlüssig an die Form der Gliederkette 24 angepaßt, so daß die waagerecht liegenden Glieder von unten hintergriffen und somit gegen ein Herausfallen gesichert werden. Die waagerechten Glieder und die senkrechten Glieder sind weiterhin durch formschlüssige Anpassung gegen ein Verkippen geschützt.

Fig. 8 zeigt ein weiteres Ausführungsbeispiel eines Antriebsgliedes mit einer Gliederkette 28 als Träger. Die Gliederkette 28 weist abwechselnd übliche ovale Glieder 28a und die in Fig. 9 dargestellten ovalen Glieder 28b mit Mittelsteg 29 auf. Die Gliederkette 28 ist analog der Gliederkette 24 in einer Führung ähnlich Fig. 7 derart aufgenommen, daß die Glieder 28b waagerecht liegen, während die Glieder 28a senkrecht stehen. Am Mittelsteg 29 ist ein Mitnehmermaterial 30 in Form kurzer Stücke angepaßt. Die Befestigung erfolgt wiederum mit Hilfe von Kabelbindern 31. Die Mitnehmermaterial-Stücke 30 sind bevorzugt länger als das waagerechte Glied und seitlich geschlitzt, so daß die beiden benachbarten senkrechten Glieder 28a eintauchen können. Die Mitnehmermaterial-Stücke 30 sind bevorzugt etwas kürzer als die Summe der Längen eines waagerechten Gliedes 28b mit einem anhängenden senkrechten Glied 28a, so daß zwischen den einzelnen Stücken des Mitnehmermaterials 30 ein geringer Abstand zum Spannungsausgleich verbleibt.

Wie Fig 10 zeigt, ist es jedoch auch möglich, ein Mitnehmermaterial 32 für den Antrieb an einer Laufrolle 33 eines Betriebsmittels 34 direkt anzubringen, bevorzugt anzuschäumen. Das Mitnehmermaterial 32 erstreckt sich dabei bevorzugt um den gesamten Umfang der Laufrolle 33, wobei die Lauffläche 33a der Laufrolle 33 als Widerlager wirkt. Je nach Verwendungszweck kann eine oder beide Laufrollen des Betriebsmittels 34 mit dem Mitnehmermaterial 32 bedeckt sein.

Aus Fig. 11 ist eine weitere Möglichkeit eines Antriebs mit Hilfe eines Mitnehmermaterials 3 ersichtlich. Das Mitnehmermaterial 35 stützt sich mit seiner Rückseite an einer Umfangsfläche 36a einer Antriebsrolle 36 ab, die derart mit einer Laufrolle 37 eines Betriebsmittels 38 verbunden ist, daß die Antriebsbewegung von der Antriebsrolle 36 auf die Laufrolle 37 übertragen werden kann. Bevorzugt ist die Antriebsrolle 36 fest mit der Laufrolle 37 verbunden und ist fliegend auf der gleichen Achse 39 gelagert.

Das Antriebsglied für die Ausführungsbeispiele nach den Figuren 10 und 11 kann beispielsweise als Rollenkette ausgebildet sein, die in gleicher Weise wie die Rollenketten nach den Fig. 1 bis 4 in einer Gleitführung gelagert und geführt ist. Als Antriebsglied kann jedoch auch ein einfaches Band oder eine anders ausgebildete Kette verwendet werden.

In Abwandlung der beschriebenen und gezeichneten Ausführungsbeispiele können beispielsweise die Einzelheiten der Figuren untereinander ausgetauscht werden. Weiterhin ist es möglich, die an einem Träger angeordneten Mitnehmermaterialien anstatt an der Laufrolle an einer gesondert vorgesehenen Antriebsrolle angreifen zu lassen, die analog der Antriebsrolle nach Fig. 11, aber ohne Mitnehmermaterial, ausgestaltet ist. Obwohl nur der Antrieb einer Laufrolle gezeigt wurde, ist es möglich, auch beide Laufrollen anzutreiben, wobei ein weiterer Träger oder ein entsprechend konstruierter Ausleger zusammen mit einem einzigen Träger verwendet werden kann. Statt der beschriebenen Ketten können auch Riemen oder dergleichen als Träger verwendet werden. Der Querschnitt des Mitnehmermaterials und/oder der Winkel des freien Schenkels der Winkellasche können entsprechend den praktischen Bedürfnissen variiert werden, so daß die Träger auf konstruktiv zweckmäßigste Art entsprechend dem vorhandenen Platz angeordnet werden können.

**Patentansprüche**

1. Hängeförderer, mit einem Betriebsmittel (1), das mit mindestens einer Laufrolle (2, 3) auf einer Laufbahn (7a, 7b, 13a, 13b) einer Schiene (7, 13) abrollt, und mit einem Antrieb, der ein langgestrecktes, flexibles Antriebsglied enthält, das mit dem Betriebsmittel (1) in Reibeingriff steht, **dadurch gekennzeichnet,** daß das Antriebsglied einen flexiblen, endlosen Träger (11, 24, 28) und ein am Träger (11, 24, 28) angeordnetes, elastisch verformbares Mitnehmermaterial (12, 30) aufweist, das sich mit seiner Rückseite gegen ein Widerlager (11, 11a, 15, 16, 21, 23, 24, 28b) abstützt und dessen freie Oberfläche zum Übertragen der Antriebskraft komprimierbar ist.

2. Hängeförderer nach Anspruch 1, **dadurch gekennzeichnet,** daß die freie Oberfläche des Mitnehmermaterials (12, 30) mit der Laufrolle (2, 3) in Reibeingriff steht.

3. Hängeförderer nach Anspruch 1 oder 2, **dadurch gekennzeichnet,** daß der Träger eine Rollenkette (11) ist.

4. Hängeförderer nach Anspruch 1 oder 2, **dadurch gekennzeichnet,** daß der Träger eine Gliederkette (24, 28) ist.

5. Hängeförderer nach einem der Ansprüche 1 bis 4, **dadurch gekennzeichnet,** daß der Träger (11, 24, 28) in einer Führung (10a, 10b, 26) aufgenommen ist.

6. Hängeförderer nach einem der Ansprüche 1 bis 5, **dadurch gekennzeichnet,** daß das Widerlager ein mit dem Träger (11, 24, 28) verbundenes flaches Band (11a) ist.

7. Hängeförderer nach einem der Ansprüche 1 bis 6, **dadurch gekennzeichnet,** daß das Widerlager als Winkellasche (15, 16, 21) ausgebildet ist, deren einer Schenkel mit dem Träger (11, 24, 28) verbunden ist, und deren anderer, das Mitnehmermaterial (12, 30) tragender Schenkel im Winkel zum Träger (11, 24, 28) vorsteht.

8. Hängeförderer nach einem der Ansprüche 2 bis 7, **dadurch gekennzeichnet,** daß der Träger (11, 24, 28) direkt als Widerlager ausgebildet ist.

9. Hängeförderer nach einem der Ansprüche 1 bis 8, **dadurch gekennzeichnet,** daß das Mitnemermaterial (12, 30) durch lösbare Verbindungsmittel (18, 20, 25, 31) mit dem Träger (11, 24, 28) verbunden ist.

10. Hängeförderer nach einem der Ansprüche 1 bis 8, **dadurch gekennzeichnet,** daß das Mitnehmermaterial (12, 30) fest mit dem Träger (11, 24, 28) verbunden, insbesondere aufgeschäumt ist.

11. Hängeförderer nach einem der Ansprüche 1 bis 10, **dadurch gekennzeichnet,** daß das Mitnehmermaterial (12) endlos ausgebildet ist.

12. Hängeförderer nach einem der Ansprüche 1 bis 10, **dadurch gekennzeichnet,** daß das Mitnehmermaterial (30) in Form von untereinander beabstandeten Segmenten ausgebildet ist.

13. Hängeförderer nach einem der Ansprüche 1 bis 12, **dadurch gekennzeichnet,** daß das Mitnehmermaterial (12, 30) einen rechteckigen Querschnitt aufweist.

14. Hängeförderer nach einem der Ansprüche 1 bis 12, **dadurch gekennzeichnet,** daß das Mitnehmermaterial (12, 30) einen dreieckigen Querschnitt aufweist.

15. Hängeförderer nach einem der Ansprüche 1 bis 14, **dadurch gekennzeichnet,** daß das Mitnehmermaterial (12, 30) zelliges Polyurethan ist.

16. Hängeförderer nach einem der Ansprüche 1 bis 14, **dadurch gekennzeichnet,** daß das Mitnehmermaterial (12, 30) Moosgummi, Zellkautschuk, Kautschuk oder andere Schaumstoffe ist.

17. Hängeförderer nach einem der Ansprüche 1 bis 16, **dadurch gekennzeichnet,** daß die Laufbahn (7b) zumindest teilweise mit einem Reibbelag (17) versehen ist.

18. Hängeförderer nach Anspruch 17, **dadurch gekennzeichnet,** daß der Reibbelag eine fest mit der Laufbahn (7b) verbundene Schicht des Mitnehmermaterials ist.

19. Hängeförderer nach einem der Ansprüche 1 bis 18, **dadurch gekennzeichnet,** daß von einem Betriebsmittel (1) mit mindestens zwei Laufrollen (2, 3), das von einer mittenabgehängten Position in eine seitenabgehängte Position umhängbar ist, Steigungs- oder Gefällstrecken in einer Seitenabhängung durchlaufen werden.

20. Hängeförderer nach einem der Ansprüche 1 bis 19, **dadurch gekennzeichnet,** daß das Mitnehmermaterial (12, 30) auf Steigungs- oder Gefällstrecken stärker komprimiert wird als auf horizontalen Strecken der Laufbahn.

**Claims**

1. Overhead conveyor having an operating means (1), which rolls with at least one running roller (2, 3) on a running path (7a, 7b, 13a, 13b) of a rail (7, 13), and having a drive which contains an elongated flexible drive member which is in frictional engagement with the operating means (1), characterised in that the drive member has a flexible continuous support (11, 24, 28) and an elastically deformable carrier material (12, 30) which is arranged on the support (11, 24, 28), is supported with its rear side against an abutment (11, 11a, 15, 16, 21, 23, 24, 28b), and the free surface of which can be compressed to transmit the drive force.

2. Overhead conveyor according to Claim 1, characterised in that the free surface of the carrier material (12, 30) is in frictional engagement with the running roller (2, 3).

3. Overhead conveyor according to Claim 1 or 2, characterised in that the support is a roller chain (11).

4. Overhead conveyor according to Claim 1 or 2, characterised in that the support is a link chain (24, 28).

5. Overhead conveyor according to one of Claims 1 to 4, characterised in that the support (11, 24, 28) is received in a guide (10a, 10b, 26).

6. Overhead conveyor according to one of Claims 1 to 5, characterised in that the abutment is a flat band (11a) which is connected to the support (11, 24, 28).

7. Overhead conveyor according to one of Claims 1 to 6, characterised in that the abutment is constructed as an angular strap (15, 16, 21), one leg of which is connected to the support (11, 24, 28), and the other leg of which, bearing the carrier material (12, 30), projects at an angle relative to the support (11, 24, 28).

8. Overhead conveyor according to one of Claims 2 to 7, characterised in that the support (11, 24, 28) is directly constructed as an abutment.

9. Overhead conveyor according to one of Claims 1 to 8, characterised in that the carrier material (12, 30) is connected to the support (11, 24, 28) by detachable connection means (18, 20, 25, 31).

10. Overhead conveyor according to one of Claims 1 to 8, characterised in that the carrier material (12, 30) is fixedly connected, in particular foamed on, to the support (11, 24, 28).

11. Overhead conveyor according to one of Claims 1 to 10, characterised in that the carrier material (12) is constructed to be continuous.

12. Overhead conveyor according to one of Claims 1 to 10, characterised in that the carrier material (30) is constructed in the form of spaced-apart segments.

13. Overhead conveyor according to one of Claims 1 to 12, characterised in that the carrier material (12, 30) has a rectangular cross-section.

14. Overhead conveyor according to one of Claims 1 to 12, characterised in that the carrier material (12, 30) has a triangular cross-section.

15. Overhead conveyor according to one of Claims 1 to 14, characterised in that the carrier material (12, 30) is cellular polyurethane.

16. Overhead conveyor according to one of Claims 1 to 14, characterised in that the carrier material (12, 30) is sponge rubber, cellular rubber, caoutchouc or other foamed materials.

17. Overhead conveyor according to one of Claims 1 to 16, characterised in that the running path (7b) is at least partially provided with a friction lining (17).

18. Overhead conveyor according to Claim 17, characterised in that the friction lining is a layer of the carrier material, which layer is fixedly connected to the running path (7b).

19. Overhead conveyor according to one of Claims 1 to 18, characterised in that an operating means (1) having at least two running rollers (2, 3), which can be transferred from a centrally suspended position to a laterally suspended position, passes through ascent or descent routes in a lateral suspension.

20. Overhead conveyor according to one of Claims 1 to 19, characterised in that the carrier material (12, 30) undergoes greater compression on ascent or descent routes than on horizontal routes of the running path.

**Revendications**

1. Convoyeur aérien avec un appareillage (1), qui roule sur une voie de roulement (7a, 7b, 13a, 13b) d'un rail (7, 13) à l'aide d'un galet de roulement (2, 3) au moins, et avec un entraînement, qui comporte un organe de commande flexible, allongé, qui est en prise par frottement avec l'appareillage (1), caractérisé en ce que l'organe de commande présente un support flexible sans fin (11, 24, 28) et un matériau d'entraînement (12, 30), disposé sur le support (11, 24, 28), doté d'une possibilité de déformation élastique, qui s'appuie, par sa face arrière, sur un contre-appui (11, 11a, 15, 16, 21, 23, 24, 28b), et dont la surface libre peut être comprimée, en vue de transmettre la force motrice.

2. Convoyeur aérien suivant la revendication 1, caractérisé en ce que la surface libre du matériau d'entraînement (12, 30) est en prise par frottement avec le galet de roulement (2, 3).

3. Convoyeur aérien suivant l'une des revendications 1 et 2, caractérisé en ce que le support est une chaîne à rouleaux (11).

4. Convoyeur aérien suivant l'une des revendications 1 et 2, caractérisé en ce que le support est une chaîne à maillons (24, 28).

5. Convoyeur aérien suivant l'une quelconque des revendications 1 à 4, caractérisé en ce que le support (11, 24, 28) est logé dans une glissière (10a, 10b, 26).

6. Convoyeur aérien suivant l'une quelconque des revendications 1 à 5, caractérisé en ce que le contre-appui est une bande plate (11a), assemblée avec le support (11, 24, 28).

7. Convoyeur aérien suivant l'une quelconque des revendications 1 à 6, caractérisé en ce que le contre-appui est réalisé sous forme de cornière (15, 16, 21), dont l'une des branches est assemblée avec le support (11, 24, 28), et dont l'autre branche, qui supporte le matériau d'entraînement (12, 30), dépasse du support (11, 24, 28) sous un certain angle.

8. Convoyeur aérien suivant l'une quelconque des revendications 2 à 7, caractérisé en ce que le support (11, 24, 28) est réalisé directement sous forme de contre-appui.

9. Convoyeur aérien suivant l'une quelconque des revendications 1 à 8, caractérisé en ce que le matériau d'entraînement (12, 30) est assemblé avec le support (11, 24, 28) par des éléments de fixation démontables (18, 20, 25, 31).

10. Convoyeur aérien suivant l'une quelconque des revendications 1 à 8, caractérisé en ce que le matériau d'entraînement (12, 30) est fixé au support (11, 24, 28), est expansé notamment.

11. Convoyeur aérien suivant l'une quelconque des revendications 1 à 10, caractérisé en ce que le matériau d'entraînement (12) est sans fin.

12. Convoyeur aérien suivant l'une quelconque des revendications 1 à 10, caractérisé en ce que le matériau d'entraînement (30) est réalisé sous forme de segments distants les uns des autres.

13. Convoyeur aérien suivant l'une quelconque des revendications 1 à 12, caractérisé en ce que le matériau d'entraînement (12, 30) présente une section rectangulaire.

14. Convoyeur aérien suivant l'une quelconque des revendications 1 à 12, caractérisé en ce que le matériau d'entraînement (12, 30) présente une section triangulaire.

15. Convoyeur aérien suivant l'une quelconque des revendications 1 à 14, caractérisé en ce que le matériau d'entraînement (12, 30) est du polyuréthanne cellulaire.

16. Convoyeur aérien suivant l'une quelconque des revendications 1 à 14, caractérisé en ce que le matériau d'entraînement (12, 30) est du caoutchouc-mousse, du caoutchouc cellulaire, du caoutchouc ou d'autres mousses.

17. Convoyeur aérien suivant l'une quelconque des revendications 1 à 16, caractérisé en ce que la voie de roulement (7b) est munie, en partie du moins, d'une garniture de friction (17).

18. Convoyeur aérien suivant la revendication 17, caractérisé en ce que la garniture de friction est une couche du matériau d'entraînement, fixée à la voie de roulement (7b).

19. Convoyeur aérien suivant l'une quelconque des revendications 1 à 18, caractérisé en ce que des sections ascendantes ou descendantes sont parcourues, dans une position d'accrochage latéral, par un appareillage (1) avec deux galets de roulement (2, 3) au moins, qui peut passer d'une position d'accrochage central dans une position d'accrochage latéral.

20. Convoyeur aérien suivant l'une quelconque des revendications 1 à 19, caractérisé en ce que le matériau d'entraînement (12, 30) est soumis, sur des sections ascendantes ou descendantes, à une compression plus intense que sur des sections horizontales de la voie de roulement.

FIG.1

FIG. 2

EP 0 304 543 B1

FIG.3

EP 0 304 543 B1

FIG. 4

13

FIG.5A

FIG.5B

FIG.5C

FIG.5D

FIG.6

FIG.7

FIG.8

FIG.9

FIG.10

FIG.11